# EUROPEAN PATENT SPECIFICATION

(11) **EP 1 591 695 B1**
(45) Date of publication and mention of the grant of the patent: **07.01.2009**
(21) Application number: 05006602.6
(22) Date of filing: 24.03.2005
(51) Int. Cl.: F16H 55/48, B29C 45/14

(54) **Method of producing pulley, method of molding insert components, and insert components**
Methode zur Herstellung einer Riemenscheibe, Methode zum Spritzgiessen von Einsatzkomponenten und Einsatzkomponente
Procédé de fabrication d'une poulie, procédé de moulage des insertions métalliques, et insertions métalliques

(30) Priority: 30.03.2004 JP 2004100187; 30.03.2004 JP 2004100004
(43) Date of publication of application: 02.11.2005
(60) Divisional application: 08009519.3
(73) Proprietor: Calsonic Kansei Corporation, Tokyo 164-8602 (JP)
(72) Inventor: Umemura, Yukio, Nakano-ku Tokyo 164-8602 (JP); Kumakura, Shingo, Nakano-ku Tokyo 164-8602 (JP)
(74) Representative: Grünecker, Kinkeldey, Stockmair & Schwanhäusser Anwaltssozietät

(56) References cited:
- US-A- 4 366 609
- US-A1- 2002 176 773
- US-A1- 2003 132 677
- US-B1- 6 200 513
- PATENT ABSTRACTS OF JAPAN vol. 2000, no. 25, 12 April 2001 (2001-04-12) -& JP 2001 227620 A (DENSO CORP), 24 August 2001 (2001-08-24)

## Description

### BACKGROUND OF THE INVENTION

The invention relates to a method of producing a pulley according to the preamble part of the independent claim 1.

From US 2003/132677 A1 a method of producing a pulley according to the preamble part of the independent claim 1 is known.

Vehicle air conditioners include a compressor. A power transmission device is incorporated in the compressor, to transmit a driving force by coupling an object to be driven and a driver that drives the object to be driven. The power transmission device intercepts transmission of the driving force when a load torque to the object to be driven exceeds a predetermined value.

The compressor has a housing having a boss formed therein. The boss rotatably supports a pulley using a bearing. A resin pulley has a belt applied over the outer surface thereof from the crankshaft of an engine. The pulley is rotated by driving the engine.

The housing has a rotation shaft protruding outward from the boss. The rotation shaft is arranged coaxially with the boss. The rotation shaft has a fixed output disk. The output disk includes an inner hub coupled to the rotation shaft and an outer hub arranged outside. The rotation shaft is rotatably supported by the bearing (see Japanese Patent Application Laid-open No. 2002-54711).

When the engine is driven, the pulley is rotated, to rotate the rotation shaft using the outer hub and the inner hub.

In this power transmission device, the bearing is arranged on the inner face of the pulley. The resin pulley is insert-molded. The bearing is set in an injection molding die for molding the pulley, and a resin is injected to the die in this set condition, to mold the pulley.

On the other hand, the bearing is fitted to the pulley, with the bearing prevented from coming off. Therefore, the outer race of the bearing forms a stopper structure such as a groove or a protrusion. The resin is injected to the stopper structure, to couple the resin and the bearing.

The stopper structure of the outer race, however, decreases the rigidity of the bearing itself, to deteriorate the performance thereof. A non-machined bearing cannot be used for the outer race, thereby losing its general use and causing an increase in the cost.

On the other hand, a resin pulley obtained by inserting an insert component therein is used for the pulley, due to a demand for lightweight and low cost. The insert component and the molding method thereof are disclosed, for example, in Japanese Patent Application Laid-open No. H7-269680.

The resin pulley includes a pulley body over which a driving belt is applied. The resin pulley is insert-molded on the inner face of the pulley body, and includes the insert component press-fitted to the outer side of the bearing. The insert component has a first circumferential recess on the outer circumference thereof. The insert component has a second axial recess obtained by knurling at positions other than the recesses on the outer circumference. The insert component is insert-molded in the pulley body, to complete the resin pulley.

During molding of the pulley body, the resin flows into the first and the second recesses in the insert component. The first recesses prevent the insert component from coming off the pulley body. The second recesses prevent the insert component from rotating with respect to the pulley body.

In this molding method, however, the outer circumference of the insert component is, for example, cut from outside to form the first and the second recesses. This method requires a mechanical process in addition to a pressing process with the die, thereby causing a slow-down in production speed and an increase in the cost.

The objective is solved according to the present invention by a method of producing a pulley rotatably supported on a support body using a bearing by resin-molding, wherein there are provided the steps of fitting the bearing to an inner surface of an insert fitting with a stopper structure on an outer surface thereof; setting the insert fitting with the bearing in a die; and performing resin-molding on the outer surface of the insert fitting, wherein the stopper structure comes into contact with the resin.

Fitting of the bearing to the insert fitting may include the step of pressing an outer race of the battery into the insert fitting.

The cylindrical shape with different inner diameters in two steps or more may include two steps of a larger diameter portion; and a smaller diameter portion.

The cylindrical shape with different inner diameters in two steps or more may include three steps of a larger diameter portion; an intermediate diameter portion smaller in diameter than the larger diameter portion; and a smaller diameter portion smaller in diameter than the intermediate diameter portion. The first pressing step may include the step of forming grooves on respective outer circumferential surfaces of the larger diameter portion and the intermediate diameter portion. The second pressing step may include the step of pressing inner surfaces of the intermediate diameter portion and the smaller diameter portion in a direction of enlargement in diameter to raise outer circumferential surfaces of the intermediate diameter portion and the smaller diameter portion, to form recesses in two rows.

The groove may include grooves formed on the outer circumferential surface in a circumferential direction with intervals. The grooves are formed in independent recesses which do not communicate with each other.

The recess may include longitudinal recesses elongated in an axial direction as the die-cutting direction. The recess may include transverse recesses elongated in a circumferential direction normal to the die-cutting direction. The longitudinal recesses and the transverse recesses are alternately formed in the circumferential direction.

The recess may include longitudinal recesses elongated in an axial direction as the die-cutting direction. The recess may include transverse recesses elongated in a circumferential direction normal to the die-cutting direction. The longitudinal recesses and the transverse recesses are combined to form substantially T-shaped recesses. The substantially T-shaped recesses are alternately formed in the circumferential direction with intervals.

The insert component may be inserted into a resin pulley body.

According to the first aspect, with the bearing fitted to the insert fitting, insert molding with a resin is performed in the die to produce a resin pulley having the bearing fitted thereto. Formation of a stopper structure on the outer surface of the insert fitting amplifies coupling force with the pulley. This prevents the insert fitting from coming off the pulley, and does not require formation of the stopper structure to the outer race of the bearing, thus keeping rigidity. Use of a normal bearing allows for general use, and reduction in production costs.

The outer race is pressed into the insert fitting, allowing for fitting of the bearing to the insert fitting. The assembly itself is used for resin-molding.

According to the second and third aspects, the first pressing step forms the groove on the outer circumferential surface of the larger diameter portion. The second pressing step permits the smaller diameter portion to be raised. The first and second pressing steps form the recesses for prevention of rotation and coming off using the grooves. The formation does not require another mechanical step in addition to the pressing steps by use of a die, enhancing productivity and reducing the production cost.

Molding by the two stepped cylindrical shape with different inner diameters allows production by simple press-deformation.

Molding of recesses in two rows enhances the force for prevention of rotation and coming off.

The recesses arranged in the circumferential direction with intervals provides prevention of rotation and coming off, thus enhancing the force for prevention of rotation and coming off substantially evenly in a circumferential direction.

The simple structure of the recesses enhances the force for prevention of rotation and coming off substantially evenly in a circumferential direction.

The molding of a resin pulley does not require another mechanical step in addition to the pressing steps by use of a die, enhancing productivity and reducing the production cost.

Further preferred embodiments of the present invention are laid down in the further subclaims. In the following, the present invention is explained in greater detail by means of several embodiments thereof in conjunction with the accompanying drawings, wherein:

### BRIEF DESCRIPTION OF THE ACCOMPANYING DRAWINGS

Fig. 1 is an exploded perspective view of a power transmission device according to a first embodiment of the present invention;
Fig. 2 is a side view of the power transmission device;
Fig. 3 is a cross-section along line III-III in Fig. 2;
Fig. 4 is a cross-section of a pulley shown in Fig. 3;
Fig. 5 shows the first embodiment and is a cross-section of a resin pulley, being a resin-molded article;
Fig. 6A is a partial plan view of an insert component;
Fig. 6B is a front elevation of the insert component;
Fig. 6C is a partial bottom view of the insert component;
Fig. 7 is a cross-section along line VII-VII in Fig. 6B;
Fig. 8A is a plan view of an insert intermediate product molded by a first pressing process according to the first embodiment;
Fig. 8B is a front elevation of the insert intermediate product in Fig. 8A;
Fig. 8C is a partial bottom view of the insert intermediate product in Fig. 8A;
Fig. 8D is a cross-section along line VIIIA-VIIIA in Fig. 8A;
Fig. 8E is a cross-section along line VIIIE-VIIIE in Fig. 8C;
Fig. 9 is a cross-section along line IX-IX in Fig. 8B;
Fig. 10A is a sectional view of a press working used for a first pressing process according to a second embodiment
Fig. 10B is a sectional view of a press working used for the second pressing process according to a second embodiment;
Fig. 11 is a partial plan view of the insert component, showing a modification example according to the second embodiment;
Fig. 12A is a partial plan view of an insert component according to a third embodiment;
Fig. 12B is a front elevation of the insert component;
Fig. 12C is a partial bottom view of the insert component;
Fig. 13A is a plan view of an insert intermediate product molded by a first pressing process;
Fig. 13B is a front elevation of the insert intermediate product in Fig. 18A;
Fig.13C is a partial bottom view of the insert intermediate product in Fig. 13A;
Fig. 14 is a cross-section along line XIV-XIV in Fig. 13B;
Fig. 15A is a sectional view of the press working used for a first pressing process according to the third embodiment;
Fig. 15B is a sectional view of the press working used for a second pressing process according to the third embodiment;
Fig. 16 is a partial plan view of the insert component, showing a modification example of the third embodiment;
Fig. 17 is a partial plan view of an insert component according to a fourth embodiment;
Fig. 18 is a plan view of the insert component;
Fig. 19 is a cross-section along line XIX-XIX in Fig. 18;
Fig. 20 is a cross-section along line XX-XX in Fig. 19;
Fig. 21 is a cross-section of a first inner die used for the first press working in the fourth embodiment;
Fig. 22 is a cross-section of the first inner die used for the first press working in the fourth embodiment;
Fig. 23 is a view in the direction of arrow XXIII in Fig. 22;
Fig. 24 is a cross-section of the press working used for the first pressing process according to the fourth embodiment;
Fig. 25 is a front elevation of the insert intermediate product molded by the first pressing process according to the fourth embodiment;
Fig. 26 is a cross-section along line XXV-XXV in Fig. 25;
Fig. 27 is a right side view of the insert component according to the fourth embodiment;
Fig. 28 is a cross-section of the press working used for the second pressing process according to the fourth embodiment;
Fig. 29A is a plan view of the insert intermediate product molded by the first pressing process;
Fig. 29B is a front elevation of the insert intermediate product in Fig. 29A;
Fig. 29C is a partial bottom view of the insert intermediate product in Fig. 29A;
Fig. 29D is a cross-section along line XXIXD-XXIXD in Fig. 25A;
Fig. 29E is a cross-section along line XXIXE-XXIXE in Fig. 29C; and
Fig. 30 is a cross-section along line XXX-XXX in Fig. 29B.

### DETAILED DESCRIPTION OF THE PREFERRED EMBODIMENTS

Preferred embodiments of the invention will be described below with reference to the accompanying drawings.

### First embodiment

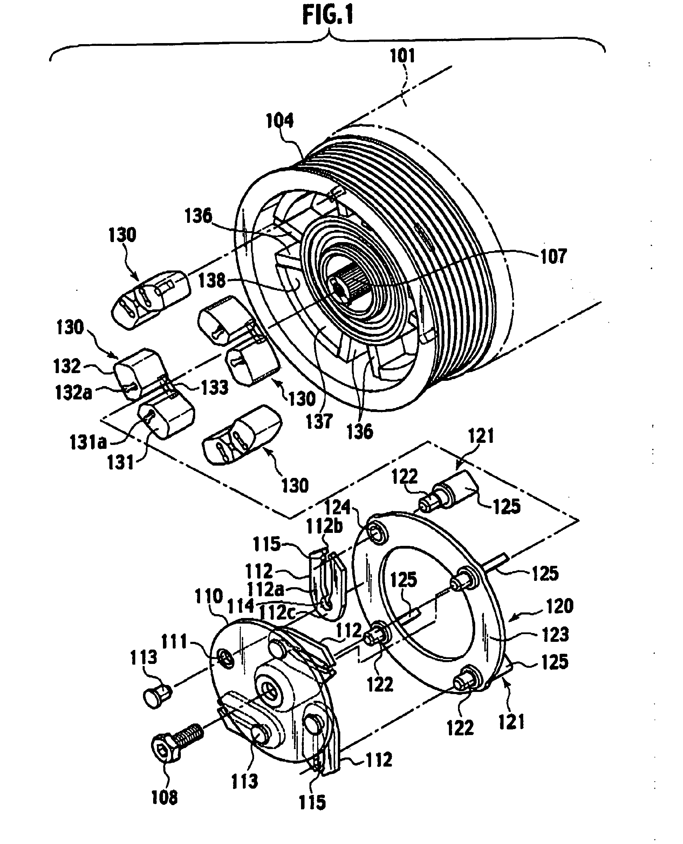

As shown in Figs. 1 to 3, a clutch-less compressor has a housing 101, which functions as a support member for a pulley 104. The pulley 104 as a driver is rotatably supported by a boss 102 by using a bearing 103. The housing 101 houses a rotation shaft 107. The rotation shaft 107 is arranged coaxially with the boss 102, and protrudes from the boss 102 outward. The rotation shaft 107 has an end to which a disc-like hub 110 as an object to be driven is fixed by using a bolt 108.

The hub 110 includes an axis 110a coupled by serration with the rotation shaft 107. The hub 110 includes a flange 110b extending in the radial direction from the axis 110a. The axis 110a and the flange 110b are integrally formed. The flange 110b has fastening holes 111 along the circumference thereof. The fastening holes 111 are positioned at four positions on the same circumference centering on the rotation shaft 107 with equal intervals of 90 degrees. A fastening pin 113 is fixed to each fastening hole 111, passing therethrough, and penetration ends of the respective fastening pins 113 are connected to the other end 112c of a leaf spring 112 in an engaged state. Engagement of the fastening pin 113 with the leaf spring 112 is performed by riveting the penetration end of the fastening pin 113 passing through the leaf spring 112.

The leaf spring 112 transmits a rotation driving force of the pulley 104 to the hub 110 by connecting the pulley 104 as the driver and the hub 110 as the object to be driven. The rotation driving force transmitted to the hub 110 rotates the rotation shaft 107. The leaf spring 112 intercepts the transmission of the driving force when a load torque to the hub 110 exceeds a predetermined value.

The four leaf springs 112 having an identical shape and an identical size are arranged corresponding to the fastening pins 113. The leaf springs 112 are made of a metal such as high carbon steel or bearing steel. The metal is formed in a thin plate shape, having resiliency.

The forked leaf spring 112 includes a pair of side pieces 112a having a gap 116 therebetween, with the one ends thereof being coupled so as to be able to open or close. The connected end of the side piece 112a, being the other end 112c of the leaf spring 112, has a through pin hole 114 that rotatably engages with the outer circumference of the fastening pin 113.

The fastening pin 113 passes through the pin hole 113, and connects the leaf spring 112 and the hub 110 by riveting the penetration end. The one end 112b of the leaf spring 112 is an open end. The open end has a holding face 115. The pin-shaped protrusion 122 of a transmission shaft 121 (described later) is inserted into the open end and held therein. The holding face 115 is removably engaged with the protrusion 122 of the transmission shaft 121.

The transmission shaft 121 is a component of a transmission member 120. The transmission member 120 has a circular ring-shaped location plate 123 as a transmission plate. The transmission shaft 121 is fitted to the location plate 123. The location plate 123 has an insertion hole 124 at quartered positions on the circumference, centering on the rotation shaft 107, which passes therethrough in the thickness direction. The location plate 123 has an insertion hole 124, and the insertion hole 124 passes therethrough in the thickness direction. The protrusion 122 of the transmission shaft 121 passes through the respective insertion holes 124. The penetration end of the protrusion 122 is detachably held by the holding face 115 of the leaf spring 112.

The transmission shaft 121 has the protrusion 122 on the leaf spring 112 side. The transmission shaft 121 has an axial plate 125 integrally extending toward the pulley 104 side, coaxially with the protrusion 122. The whole transmission shaft 121 extends parallel to the axial direction of the rotation shaft 107. The flat axial plate 125 is connected to the pulley 104 via a dumper 130.

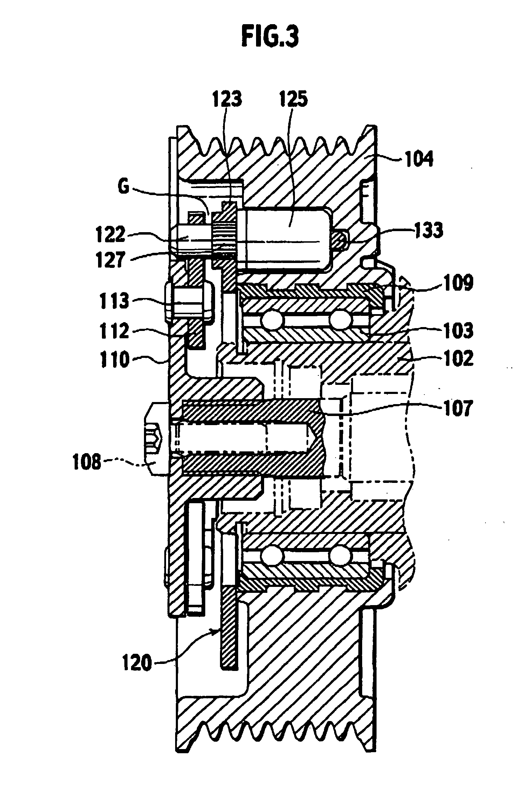

As shown in Fig. 3, the transmission shaft 121 has a fixed portion 127 having a serrated outer surface. The fixed portion 127 is positioned between the protrusion 122 and the axial plate 125, and inserted into the insertion hole 124 in the location plate 128. The inner circumferential face of the insertion hole 124 has a serration, which engages with the serration of the fixed portion 127. The engagement of these serrations allows connection between the transmission shaft 121 and the location plate 123, with the transmission shaft 121 prevented from rotating.

As shown in Fig. 1, the dumper 130 includes a pair of dumper bodies 131 and 132 formed substantially in a block of quadratic prism. The dumper 130 includes a link band 133 that connects the dumper bodies 131 and 132. The whole dumper 130 is made of an elastic body such as rubber, soft resin or the like. The link band 133 connects the dumper bodies 131 and 132 on one side of the dumper bodies 131 and 132 in the height direction. The dumper bodies 181 and 132 has an insertion space 134 in which the axial plate 125 of the transmission shaft 121 is inserted therebetween in the connected state by the link band 133.

As shown in Fig. 1, the dumper bodies 131 and 132 have grooves 131a and 132a. The driving force from the pulley 104 acts to resiliently compress the grooves 131a and 132a.

The dumper 130 is inserted into the pulley 104 and housed therein, to transmit the driving force of the pulley 104 to the transmission shaft 121. The pulley 104 includes therein ribs 136 radially extending from the inner wall thereof radially inward. The ribs 136 have a step 137 protruding stepwise therebetween. The ribs 136 and the steps 137 enclose a housing space 138, and the dumper 180 is inserted and housed therein. At the time of housing, the dumper 130 is inserted in the housing space 138 from the link band 133 side. Accordingly, the insertion space 134 is positioned on the transmission member 120 side.

The axial plate 125 is inserted in the insertion space 134 with respect to the dumper 130 inserted in the housing space 138. Accordingly, the pulley 104 and the transmission member 120 are connected with each other via the dumper 130 and the transmission shaft 121. The leaf spring 112 is fitted to the hub 110 by using the fastening pin 113. The leaf spring 112 has the holding face 115, and the protrusion 122 of the transmission shaft 121 is fitted therein so as to engage therewith. Accordingly, the pulley 104 and the hub 110 are connected with each other via the transmission member 120 and the leaf spring 112.

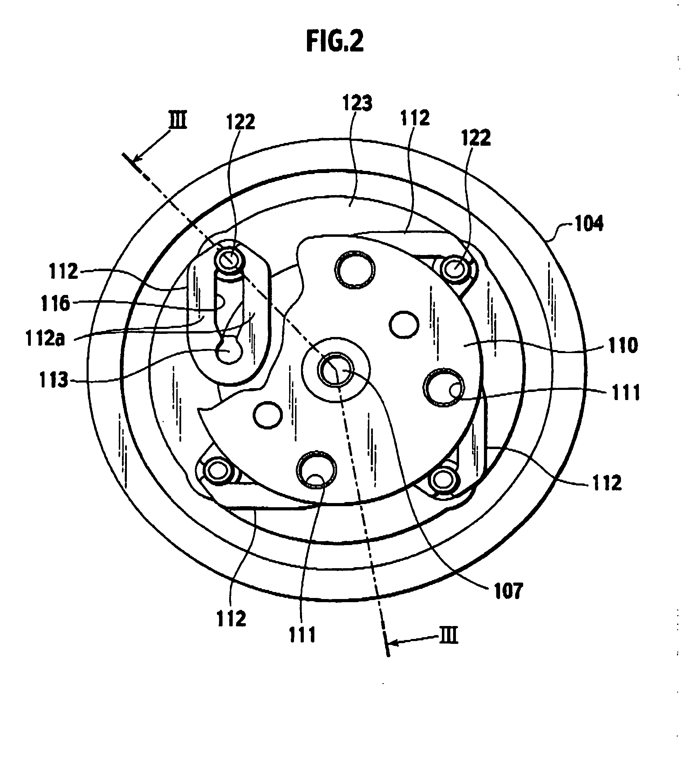

As shown in Fig. 2, the leaf spring 112 is fitted substantially at a right angle with respect to a straight line connecting the center of the rotation shaft and the pin 113 of the hub 110. This fitting reduces the arrangement space of the leaf spring 112 to make it compact, and increases the length of the arm of the transmitted load torque.

The holding faces 115 of the leaf spring 112 have a curvature corresponding to the outer circumference of the protrusion 122 of the transmission shaft 121. Accordingly, the holding faces 115 securely hold the protrusion 122 therebetween. When the protrusion 122 moves toward the open ends 112b along the holding surfaces 115, the protrusion 122 comes out from the open ends 112b of the leaf spring 112. This disconnects the leaf spring 112 and the transmission member 120 from each other, and hence, the leaf spring 112 is disengaged from the connection state with the pulley 104 and the hub 110.

In this structure, when the load torque from the compressor side is not larger than the predetermined value, the driving force of the engine is provided to the pulley 104 via a belt (not shown), and transmitted to the hub 110 through the dumper 130, the transmission member 120, and the pin 113 to rotate the rotation shaft 107. At this time, the rotation shaft 107 rotates around the boss 102 with the rotation shaft 107 supported by the bearing 103.

The dumper 130 formed of an elastic member is arranged in a transmission route of the driving force to the rotation shaft 107. Since the dumper 130 absorbs or attenuates shock, unnecessary vibration and the like, only the driving force of the pulley 104 is transmitted to the hub 110 and the rotation shaft 107 to smoothly rotate the rotation shaft 107. The dumper 130 is inserted into the housing space 138 separated by the ribs 136 and compressed in the housing space 138 under the transmitted driving force. This allows the driving force to be reliably transmitted to the transmission member 120.

When the load torque exceeds the predetermined value due to a seizure occurring in the compressor, the protrusion 122 held on the holding faces 115 of the leaf spring 112 is disengaged from the open ends 112b. This disengagement intercepts transmission of power from the pulley 104 to the rotation shaft 107, thereby making the pulley 104 slip. The structure in which the leaf spring 112 is disengaged from the connected state prevents the leaf spring 112 from being broken. This structure does not require replacement of the leaf spring 112 and the transmission member 120 and allows easy reassembly.

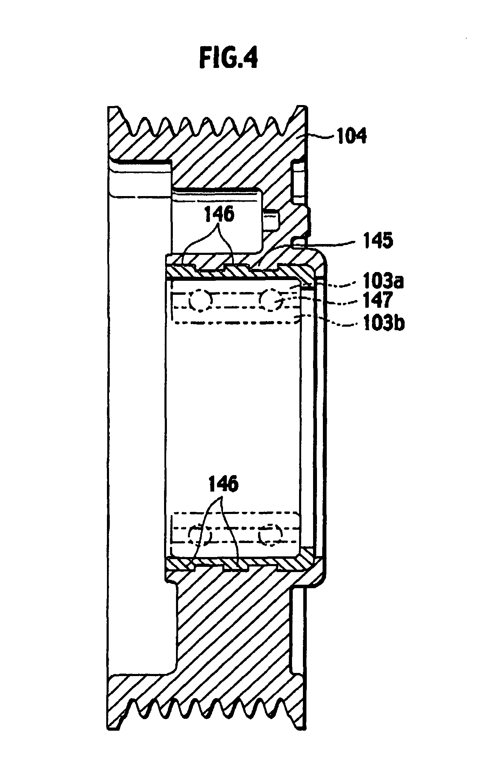

In Fig. 4, the pulley 104 includes an insert fitting 109 therein. The pulley 104 is molded from resin, thereby enabling a light weight. The insert fitting 109 is positioned around the boss 102 in the pulley 104 to hold the bearing 103. The bearing 103 uses a ball bearing, and an outer race 103a of the bearing 103 where a ball 147 is arranged between the outer race 103a and an inner race 103b is held by the insert fitting 109, and arranged in the pulley 104 by using the insert fitting 109.

The insert fitting 109 has a stopper structure 145 as a protrusion 146 on the outer surface thereof. The protrusions 146 are formed on the outer surface of the insert fitting 109 along the axial direction. The protrusions 146 lock the inside of the pulley 104 to increase the bonding power with the pulley 104, so that the insert fitting 109, that is, the bearing 103 is prevented from coming off the pulley 104.

A production method of the pulley 104 will be described below.

The bearing 103 is fitted to the inner face of the insert fitting 109. In the fitting of the bearing 109 to the insert fitting 109, the outer race 103a of the bearing 103 is press-fitted to the insert fitting 109.

The insert fitting 109 is set in the molding die with the bearing 103 being fitted. In this case, the insert fitting 109 is set so that the protrusion 146 on the outside surface comes in contact with the resin. In this set state, the melt resin is injected into the die, and the resin is cooled and cured to make a resin pulley. The bearing 103 is integrally fitted to the produced pulley 104. This fitting does not require the fitting step of the bearing 103, so the production process of the power transmission device is simplified.

The thus produced pulley 104 maintains the rigidity of the bearing 103, without requiring the stopper structure 145 of the protrusion 146 in the outer race 103a of the bearing 103. Use of a normal bearing ensures the general use and allows a reduction in cost.

### Second Embodiment

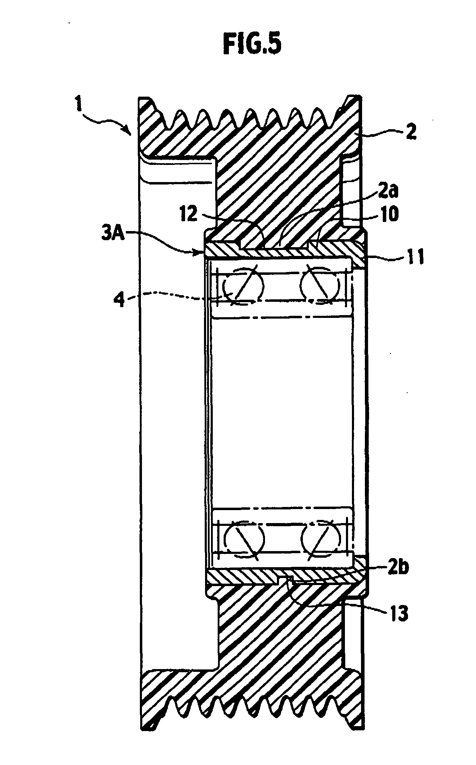

As shown in Fig. 5, a pulley 1, being a resin molded article, includes a pulley body 2 made of resin, over which a driving belt (not shown) is applied. The pulley 1 includes an insert component 3A insert-molded in the inner circumference of the pulley body 2 and press-fitted to the outer side of a bearing 4.

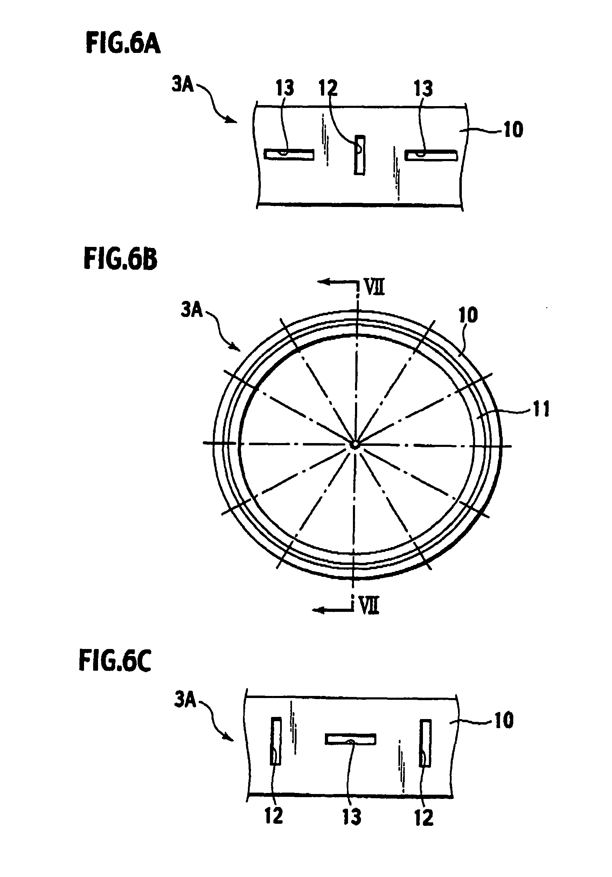

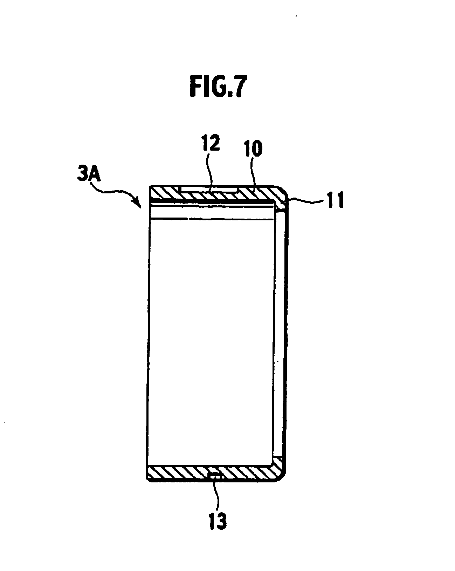

As shown in Figs. 6A to 6C and 7, the metal insert component 3A includes a cylindrical part 10 having a one-step inner diameter. The insert component 3A includes a locking edge 11 protruding from one end of the cylindrical part 10 toward the inner circumference side. In the Figs. 6A and 6C, the cylindrical part 10 has longitudinal recesses 12 and transverse recesses 13 as recesses alternately at twelve positions with equal intervals on the outer circumference thereof. The longitudinal recess 12 has a concave shape elongated in the axial direction. The transverse recess 13 has a concave shape elongated in the circumference direction.

The insert component 3A is insert-molded in the pulley body 2, to provide the resin pulley 1 shown in Fig. 5. The resin flows into the longitudinal and transverse recesses 12 and 13 of the insert component 3A during molding of the pulley body 2, forming protrusions 2a and 2b. The longitudinal and transverse recesses 12 and 13 function as stoppers for preventing the insert component 3A from rotating with respect to the resin pulley 1 and coming off the resin pulley 1. Specifically, the longitudinal recess 12 has a wide side of the groove along the axial direction, which provides a large rotation-blocking force against the rotation of the insert component 3A with respect to the resin pulley body 2. The transverse recess 13 has a wide side of the groove along the circumferential direction, which provides a large force for preventing the insert component 3A from coming off the resin pulley body 2. In other words, the longitudinal recesses 12 mainly prevent the relative rotation between the insert component 3A and the resin pulley body 2. The transverse recesses 13 mainly prevent the insert component 3A from coming off the resin pulley body 2.

The molding method of the insert component 3A will be described with reference to Figs. 7 to 10B.

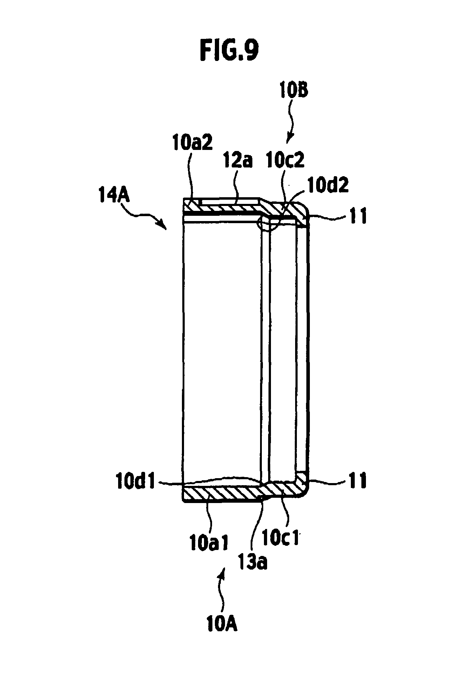

Firstly, the insert intermediate product 14A is molded. In Fig. 9, the insert intermediate product 14A has first profiles 10A and second profiles 10B alternately arranged in the circumference direction. The first profiles 10A and second profiles 10B have larger diameter portions 10a1, 10a2 and smaller diameter portions 10c1, 10c2, respectively. The first profiles 10A and second profiles 10B have steps 10d1, 10d2 obliquely extending between the larger and smaller diameter portions 10a1, 10a2 and 10c1, 10c2 on the inside thereof. The insert intermediate product 14A includes a locking edge 11 extending radially inward from the end of smaller diameter portions 10c1, 10c2.

The insert intermediate product 14A has transverse grooves 13a open in a die-cutting direction (an axial direction) on the outer surface of the larger diameter portions 10a1 of the first profile 10A. The transverse grooves 18a are elongated to extend in the circumferential direction, being a direction normal to the die-cutting direction. The insert intermediate product 14A has longitudinal grooves 12a open in the die-cutting direction (an axial direction) on the outer surface of the larger diameter portions 10a2 of the second profile 10B. The longitudinal grooves 12a are elongated to extend in the axial direction as the die-cutting direction. The longitudinal grooves 12a and the transverse grooves 13a are positioned alternately in the circumferential direction with equal intervals, respectively.

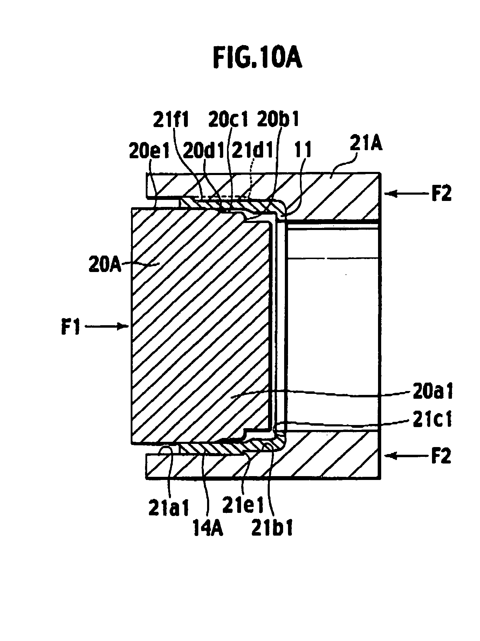

With reference to Fig. 10A, at first, a first inner die 20A having a two-step circumferential difference in level and a first outer die 21A having protrusions at 12 positions in the circumferential direction with equal intervals are provided.

The first inner die 20A includes an end edge cylinder 20a1, a first press cylinder 20c1 larger in diameter than cylinder 20a1, a second press cylinder 20e1 larger in diameter than the cylinder 20c1. The cylinders 20a1, 20c1 have a step 20b1 therebetween. The cylinders 20c1, 20e1 have an oblique step 20d1 therebetween.

The first outer die 21A includes a first press-receiving circumference wall 21a1. The first outer die 21A includes a second press-receiving circumference wall 21b1 smaller in diameter than the first circumference wall 21a1. The first outer die 21A includes inner wall 21c1 extending radially inward from the second press-receiving circumference wall. The first outer die 21A includes a step 21d1 extending obliquely between the first and second press-receiving circumference walls 21a1, 21b1.

The first outer die 21A includes respective six of first protrusions 21e1 and second protrusions 21f1 which protrude radially inward from the first press-receiving circumference wall 21a1 and have the identical height with the second press-receiving circumference wall 21b1 The first protrusions 21e1 and second protrusions 21f1 are arranged alternately in the circumferential direction with equal intervals. The first protrusions 21e1 are elongated in the circumferential direction. The second protrusions 21f1 are elongated in the axial direction.

The first inner and outer dies 20A, 20B are used to perform a first pressing process, to press a disk-shaped metal plate. The metal plate is set in the first inner and outer dies 20A, 21A. Next, the first outer die 21A are pressed in the opposite directions F1 and F2 to mold the metal plate. That is, end edge cylinder 20a1 moves forward in the first outer die 21A. The step 20b1 presses the metal plate against the inner wall 21c1 for deformation, forming the locking edge 11. The first cylinder 20c1 and the second circumference wall 20b1 form the metal plate into smaller diameter portions 10c1, 10c2. The second cylinder 20e1 and the first circumference wall 21a1 form the metal plate into the larger diameter portions 10a1, 10a2. The step 20d1 forms the steps 10d1, 10d2. The first protrusions 21e1 form transverse grooves 13a. The second protrusions 21f1 form longitudinal grooves 12a.

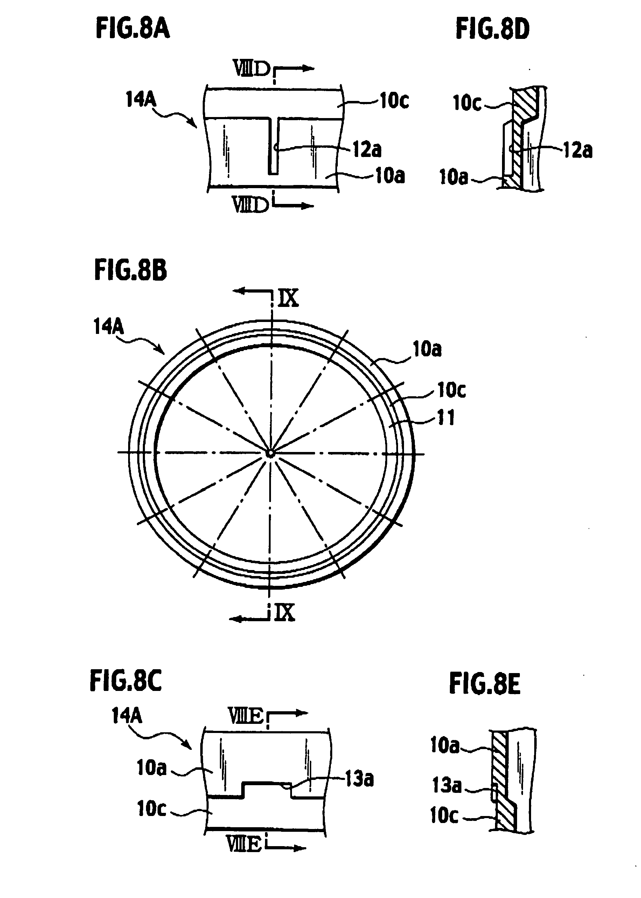

As shown in Figs. 8A to 8E and Fig. 9, a two-step cylindrical insert intermediate product 14A having different inner diameters is molded by this press.

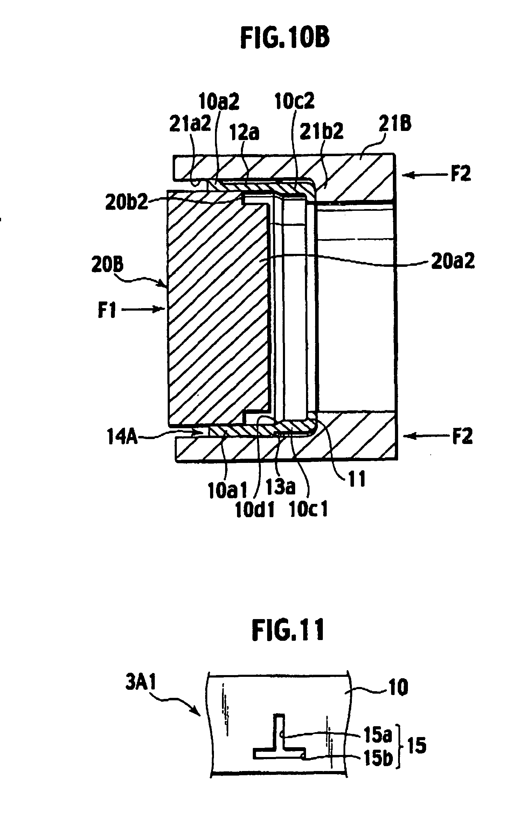

As shown in Fig. 10B, at a second pressing process, second inner and outer dies 20B and 21B are provided. The second inner die 20B includes an end edge cylinder 20a2 having a diameter corresponding to the locking edge 11 of the insert intermediate product 14A. The second inner die 20B also includes a press cylinder 20b2 having substantially the same outer diameter as each inner diameter of the larger diameter portions 10a1, 10a2 of the insert intermediate product 14A. The press cylinder 20b2 has a larger diameter than that of the end edge cylinder 20a2. The hollow second outer die 21B includes a press-receiving circumference wall 21a2 having substantially the same diameter as those of the outer circumferences of the larger diameter portions 10a1, 10a2 of the insert intermediate product 14A. The second outer die 21B also has an inner wall 21b2 for receiving the locking edge 11 of the insert intermediate product 14A. The circumference wall 21a2 is larger in diameter than the inner wall 21b2.

The insert intermediate product 14A is inserted into the second outer die 21 along the circumference wall 21a2. The inner wall 21b2 abuts against the locking edge 11, to position the insert intermediate product 14A with respect to the second outer die 21B. The second inner die 20B is then inserted into the second outer die 21B and the insert intermediate product 14A. The second inner die 20B and the second outer die 21B are then moved respectively in the opposite directions F1 and F2. The press cylinder 20b2 abuts against the step 10d1. The press cylinder 20b2 presses the inner face of the smaller diameter portion 10c of the insert intermediate product 14A outward in the radial direction, thereby enlarging the diameter. The circumference wall 21a2 enters the inner wall 21b2, and hence, the press cylinder 20b2 abuts against the locking edge 11, thereby preventing the relative movement between the second inner die 20B and the second outer die 21B.

Accordingly, the opened portions of the longitudinal and the transverse grooves 12a and 13a in the die-cutting direction on the outer circumference of the smaller diameter portion 10c are raised (diameter enlargement). The longitudinal and transverse recesses 12, 13 for preventing the insert component 3A from rotating and coming off are formed in the circumferential direction with equal intervals, by using the longitudinal and the transverse grooves 12a and 13a.

In the insert molding method, at the first pressing process, the longitudinal and transverse grooves 12a and 13a are molded on the outer circumferences of the larger diameter portions 10a1, 10a2. At the second pressing process, the smaller diameter portions 10c1, 10c2 are raised, to mold the longitudinal and transverse recesses 12 and 13 for preventing the insert component from rotating and coming off by using the longitudinal and transverse grooves 12a and 13a. This method does not require a mechanical process other than the pressing process with the die, thereby improving the productivity and reducing the cost.

Since it is only necessary to form the insert intermediate product 14A in a two-step cylindrical shape, the insert component 3A is formed by a simple press deformation.

The longitudinal and the transverse grooves 12a and 13a are molded with intervals in the circumferential direction on the outer circumferences of the larger diameter portions 10a1, 10a2. By the longitudinal and the transverse grooves 12a and 13a, independent longitudinal and the transverse recesses 12 and 18, which do not communicate with each other, are molded. The longitudinal and the transverse recesses 12 and 13 arranged in the circumferential direction with intervals provide prevention of the insert component 3A from rotating and coming off, thereby improving force for preventing the insert component from rotating and coming off substantially evenly in the circumferential direction.

The groove has the longitudinal groove 12a elongated in the axial direction as the die-cutting direction, and the transverse grooves 13a elongated in the circumferential direction as a direction normal to the die-cutting direction. As the longitudinal and the transverse grooves 12a and 13a are molded alternately in the circumferential direction, the shape of the recess is made simple, and force for preventing the insert component from rotating and coming off is improved substantially evenly in the circumferential direction.

Fig. 11 shows a modified example of the second embodiment, and is a partial plan view of the insert component 3A1. The insert component 3A1 includes a longitudinal groove 15a extending in the axial direction as the die-cutting direction, and transverse grooves 15b extending in the circumferential direction, being a direction normal to the die-cutting direction. The longitudinal and the transverse grooves 15a and 15b are combined to form a substantially T-shaped recess 15. The substantially T-shaped recesses 15 are formed with equal intervals in the circumferential direction.

Also in this modified example, the force for preventing the insert component from rotating and coming off is improved substantially evenly in the circumferential direction.

### Third Embodiment

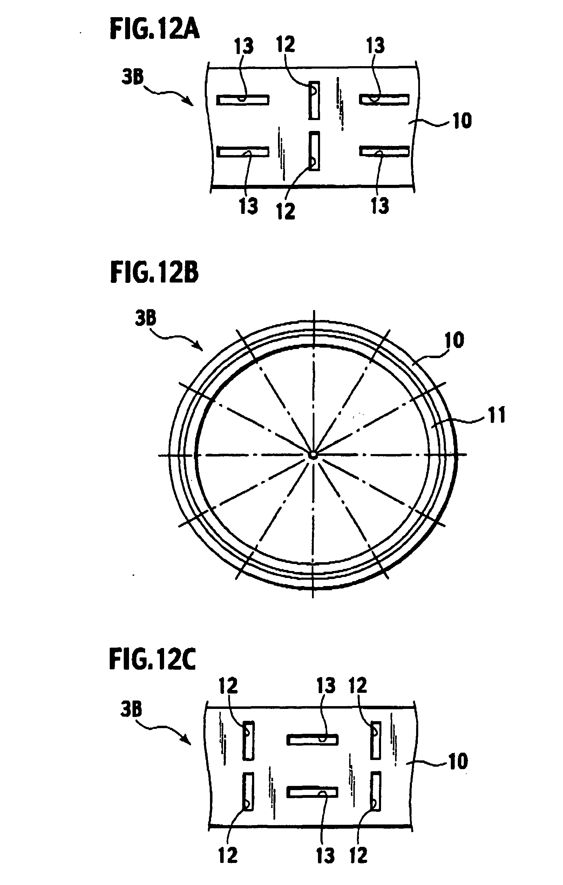

The insert component 3B includes, as shown in Figs. 12A to 12C, a cylindrical part 10 having a one-step cylindrical inner diameter. The metal insert component 3B includes the locking edge 11 protruding on the inner circumferential side at one end of the cylindrical part 10. The cylindrical part 10 has the longitudinal and the transverse recesses 12 and 13 as recesses at 12 positions on the outer circumference thereof with equal intervals. The longitudinal and the transverse recesses 12 and 13 are arranged axially in two rows. According to the second embodiment, the longitudinal and the transverse recesses 12 and 13 are arranged in one row, while according to the third embodiment, it is different in that the longitudinal and the transverse recesses 12 and 13 are arranged in two rows, and other configurations are identical.

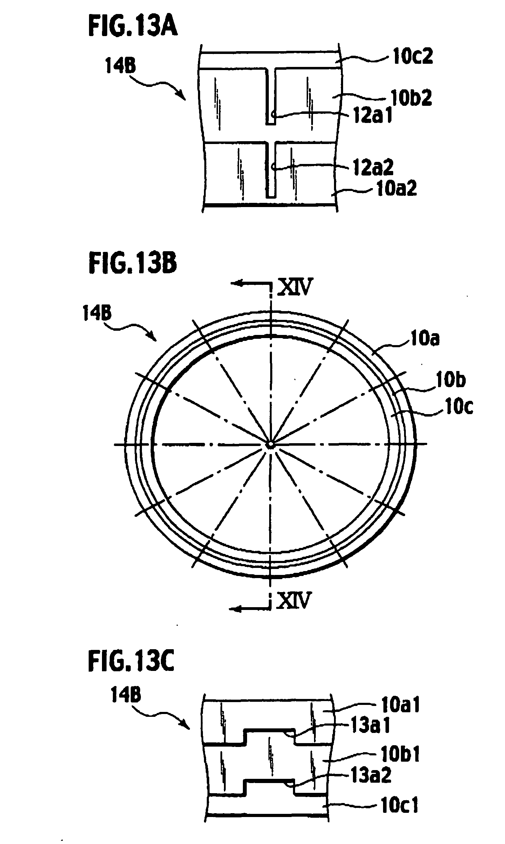

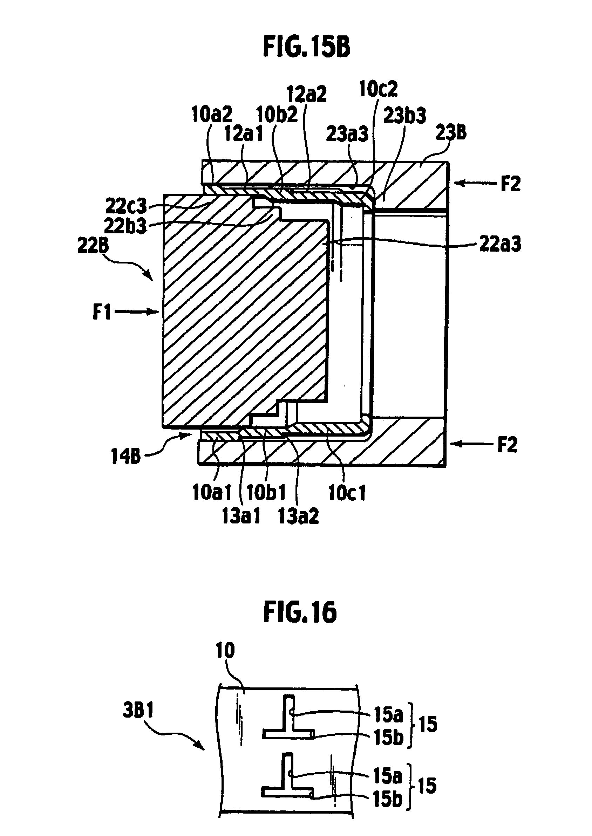

The molding method of the insert component 3B will be described with reference to Figs. 13A to 15B. Firstly, the insert intermediate product 14B is molded. In Fig. 15B, the insert intermediate product 14B has first profiles 10A and second profiles 10B alternately arranged in the circumference direction. The first and second profiles 10A, 10B have first and second larger diameter portions 10a1, 10a2, respectively. The first and second profiles 10A, 10B have first and second intermediate diameter portions 10b1, 10b2 smaller in diameter than the first and second larger diameter portions 10a1, 10a2, respectively. The first and second profiles 10A, 10B have first and second smaller diameter portions 10c1, 10c2 further smaller in diameter than the first and second intermediate diameter portions 10b1, 10b2, respectively

The first profiles 10A have first and second transverse grooves 13a1, 13a2 open in a die-cutting direction (an axial direction) on the outer surfaces of the larger and intermediate diameter portions 10a1, 10b1 (larger in diameter than the smaller diameter portions 10c1). The transverse grooves 13a1, 13a2 are elongated to extend in the circumferential direction, being a direction normal to the die-cutting direction.

The second profiles 10B have first and second longitudinal grooves 12a1, 12a2 open in a die-cutting direction (an axial direction) on the outer surfaces of larger and intermediate diameter portions 10a2, 10b2 (larger in diameter than the smaller diameter portions 10c2). The longitudinal grooves 12a1, 12a2 are elongated to extend in the axial direction as the die-cutting direction. The longitudinal grooves 12a1, 12a2 and the transverse grooves 13a1, 13a2 are positioned alternately in the circumferential direction with equal intervals.

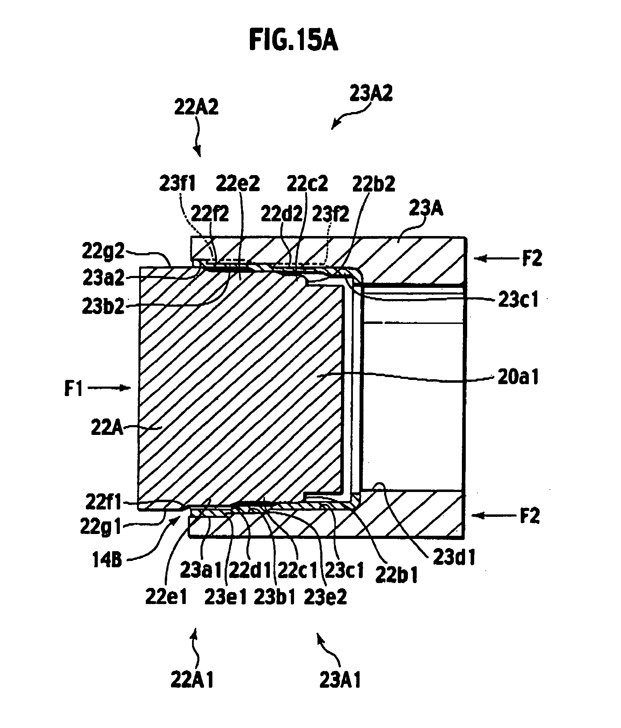

At first, a first inner die 22A and a first outer die 23A are used to perform a first pressing process, to press a disk-shaped metal plate. In Fig. 15A, the first inner die 22A has a three-step inner circumferential difference in level.

The first inner die 22A has first and second profiles 22A1 and 22A2 alternately arranged in the circumferential direction. The first inner die 22A has an end edge cylinder 22a1 common to the first and second profiles 22A1, 22A2.

The first and second profiles 22A1, 22A2 include first press cylinders 22c1, 22c2 larger in diameter than the end edge cylinder 22a1, respectively. The first and second profiles 22A1, 22A2 include second press cylinders 22e1, 22e2 larger in diameter than the first press cylinders 22c1, 22c2, respectively. The first and second profiles 22A1, 22A2 include third press cylinders 22g1, 22g2 larger in diameter than the second press cylinders 22e1, 22e2.

The end edge cylinder 22a1 and the first press cylinders 22c1, 22c2 have steps 22b1, 22b2 therebetween, respectively. The first and second press cylinders 22c1, 22e1 have an oblique step 22d1 therebetween. The first and second press cylinders 22c2, 22e2 have an oblique step 22d2 therebetween. The second and third press cylinders 22e1, 22g1 have an oblique step 22f1 therebetween. The second and third press cylinders 22e2, 22g2 have an oblique step 22f2 therebetween.

Each first press cylinder 22c1 of the first profiles 22A1 extends over the first press cylinder 22c2 of the second profile 22A2 to reach the second press cylinder 22e2 in the axial direction. Each second press cylinder 22e1 of the first profiles 22A1 extends from the second press cylinder 22e2 of the second profile 22A2 to reach the third press cylinder 22g2 in the axial direction.

The first outer die 23A has a three-step inner circumferential difference in level, and protrusions at 12 positions in the circumferential direction with equal intervals. The first outer die 23A has first profiles 23A1 and second profiles 2SA2 alternately arranged in the circumferential direction. The first and second profiles 23A1, 23A2 have first press-receiving circumference walls 23a1, 23a2, respectively. The first and second profiles 23A1, 23A2 have second press-receiving circumference walls 28b1, 23b2 smaller in diameter than the first press-receiving circumference walls 23a1, 23a2, respectively. The first and second profiles 23A1, 23A2 have third press-receiving circumference walls 28c1, 23c2 smaller in diameter than the second press-receiving circumference walls 23b1, 23b2, respectively. The first and second profiles 23A1, 23A2 have inner wall 23d1 extending radially inward from the third press-receiving circumference walls 23c1, 28c2.

Each of the first profiles 23A1 has first protrusions 23e1, 23e2 which protrude radially inward from the first and second press-receiving circumference walls 23a1, 23b1 and have an identical height with the second and third press-receiving circumference walls 23b1, 23c1, respectively. The first protrusions 23e1, 23e2 are elongated in the circumferential direction of the first outer die 23A.

Each of the second profiles 23A2 has second protrusions 23f1, 23f2 which protrude radially inward from the first and second press-receiving circumference walls 23a2, 23b2 and have an identical height with the second and third press-receiving circumference walls 23b2, 23c2, respectively. The second protrusions 23f1, 23f2 are elongated in the axial direction of the first outer die 23A.

The first protrusions 23e1, 23e2 and the second protrusions 23f1, 23f2 are arranged alternately in the circumferential direction with equal intervals.

The first inner and outer dies are used to perform a first pressing process to press a disk-shaped metal plate. The metal plate is set in the first outer die 23A. Next, the first inner and outer dies 22A, 28A are pressed in the opposite directions F1 and F2 to mold the metal plate. That is, end edge cylinder 22a1 moves forward in the first outer die 23A. The steps 22b1, 22b2 press the metal plate against the inner wall 23d1 for deformation, forming the locking edge 11.

The first press cylinders 22c1, 22c2 and the third circumference walls 23c1, 23c2 mold the metal plate into smaller diameter portions 10c1, 10c2. The second press cylinders 22e1, 22e2 and the second circumference walls 25b1, 23b2 mold the metal plate into the intermediate diameter portions 10b1, 10b2. The third press cylinders 22g1, 22g2 and the first circumference walls 23a1, 23a2 mold the metal plate into the smaller diameter portions 10a1, 10a2.

The first protrusions 23e1, 23e2 form the transverse grooves 13a1, 13a2. The second protrusions 23f1, 23f2 form longitudinal grooves 12a1, 12a2.

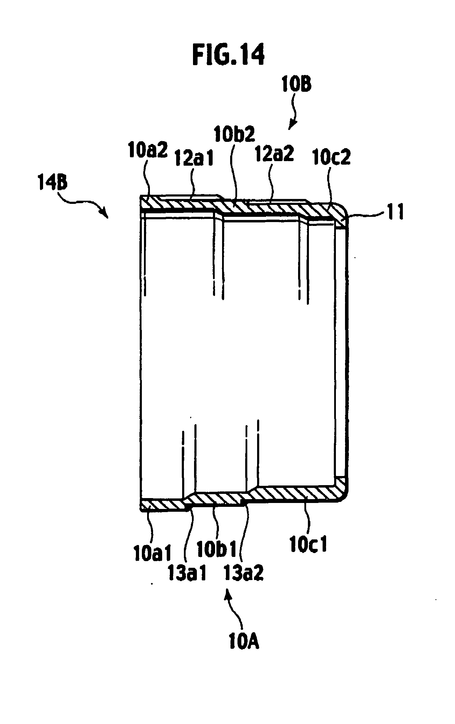

Accordingly, as shown in Figs. 13A to 13C, and Fig. 14, the insert intermediate product 14B has a three-step cylindrical shape having different inner diameters.

As shown in Fig. 15B, a second pressing process will be described. The second inner and outer dies 22B and 23B are used to press the inner faces of the intermediate diameter portions 10b1, 10b2 (smaller in diameter than the larger diameter portions 10a1, 10a2) and the smaller diameter portions 10c1, 10c2 of the insert intermediate product 14B in the direction of enlarging the diameter.

The second inner die 22B has an end edge cylinder 22a3 having a diameter corresponding to the locking edge 11 of the insert intermediate product 14B, and press cylinders 22b3, 22c3 having a two-step difference in level. The cylinders 22b3, 22c3 respectively have substantially the same outer diameter as the respective inner diameters of the intermediate diameter portions 10b1, 10b2 (larger in diameter than the smaller diameter portions 10c1, 10c2) and the larger diameter portions 10a1, 10a2 of the insert intermediate product 14B.

The second outer die 23B has a press-accepting circumference 23a3 having substantially the same diameter as those of the outer circumferences of the larger diameter portions 10a1, 10a2 of the insert intermediate product 14B. The second outer die 23B also has an inner wall 23b3 for accepting the locking edge 11 of the insert intermediate product 14B.

Accordingly, the opened portions of the longitudinal and the transverse grooves 12a1, 12a2, 13a1 and 13a2 in the die-cutting direction on the outer circumferences of the intermediate diameter portions 10b1, 10b2 and the smaller diameter portions 10c1, 10c2 are raised (diameter enlargement). The longitudinal and transverse recesses 12 and 13 for preventing the insert component from rotating and coming off are formed in the circumferential direction with equal intervals, by using the longitudinal and the transverse grooves 12a1, 12a2, 13a1 and13a2.

In the insert molding method, at the first pressing process, the longitudinal and transverse grooves 12a1, 12a2, 13a1, and 13a2 are molded on the outer circumferences of the larger diameter portions 10a1, 10a2 and the intermediate diameter portions 10b1, 10b2. At the second pressing process, the intermediate diameter portions 10b1, 10b2 and the smaller diameter portions 10c1, 10c2 are respectively raised, to mold the longitudinal and transverse recesses 12 and 13 in two rows for preventing the insert component from rotating and coming off by using the longitudinal and transverse grooves 12a1, 12a2 13a1, and 13a2. This molding method does not require a mechanical process other than the pressing process with the die, thereby improving productivity and reducing the production cost.

The longitudinal and the transverse grooves 12a1, 12a2, 13a1, and 13a2 are positioned with intervals in the circumferential direction on the outer circumferences of the larger diameter portion larger diameter portions 10a1, 10a2 and the intermediate diameter portion 10b1, 10b2. By the longitudinal and the transverse grooves 12a1, 12a2, 13a1, and 13a2, independent longitudinal and the transverse recesses 12 and 13, which do not communicate with each other, are molded. The longitudinal and the transverse recesses 12 and 13 arranged in the circumferential direction with intervals provide prevention of the insert component from rotating and coming off, thereby improving the force for preventing the insert component from rotating and coming off substantially evenly in the circumferential direction.

The groove has the longitudinal grooves 12a1, 12a2 extending in the axial direction, being the die-cutting direction, and the transverse grooves 13a1, 13a2 extending in the circumferential direction, being a direction normal to the die-cutting direction. As the longitudinal and the transverse grooves 12a1, 12a2, 13a1 and 13a2 are molded alternately in the circumferential direction, the shape of the recess can be made simple, and the force for preventing the insert component from rotating and coming off is improved substantially evenly in the circumferential direction.

Fig. 16 shows a modified example of the third embodiment, and is a partial plan view of the insert component 3B1. The insert component 3B1 includes a longitudinal groove 15a extending in the axial direction as the die-cutting direction, and a transverse groove 15b extending in the circumferential direction, being a direction normal to the die-cutting direction. The longitudinal and the transverse grooves 15a and 15b are combined to form a substantially T-shaped recess 15. The substantially T-shaped recesses 15 in two rows are positioned with equal intervals in the circumferential direction.

Also in this modified example, the force for preventing the insert component from rotating and coming off is improved substantially evenly in the circumferential direction.

### Fourth Embodiment

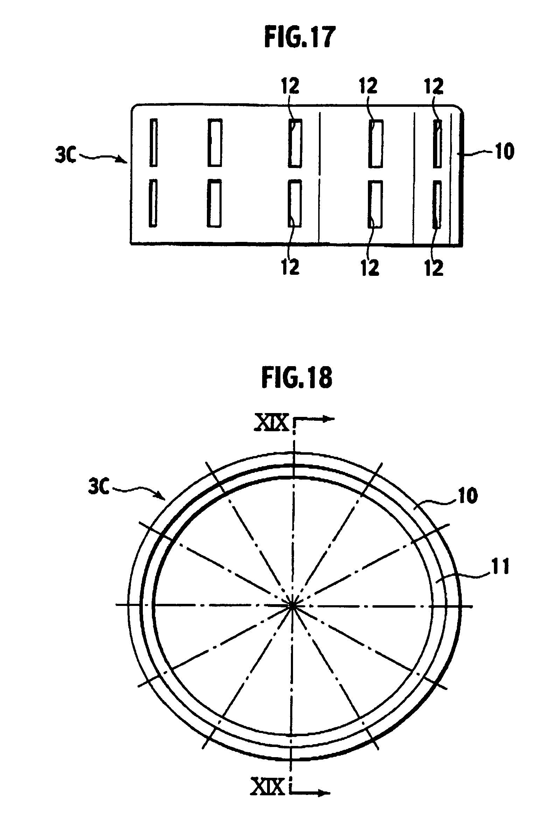

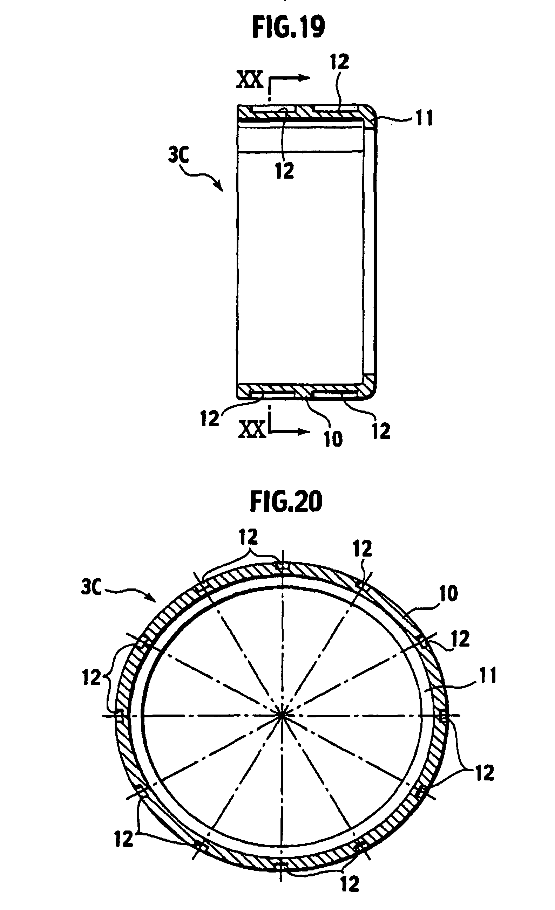

The insert component 3C includes, as shown in Figs. 17 to 20, a cylindrical part 10 having a one-step cylindrical inner diameter. The insert component 3C includes the locking edge 11 protruding on the inner circumferential side at one end of the cylindrical part 10. The cylindrical part 10 has the longitudinal recesses 12 as recesses in two rows at 12 positions on the outer circumference thereof with equal intervals. According to the third embodiment, the two-row recesses are arranged such that the longitudinal and the transverse recesses 12 and 18 are alternately arranged. However, according to the fourth embodiment, it is different in that the two-row recesses are the longitudinal recesses 12. As other configurations are identical, like parts are designated with like reference numerals, and the description thereof is omitted.

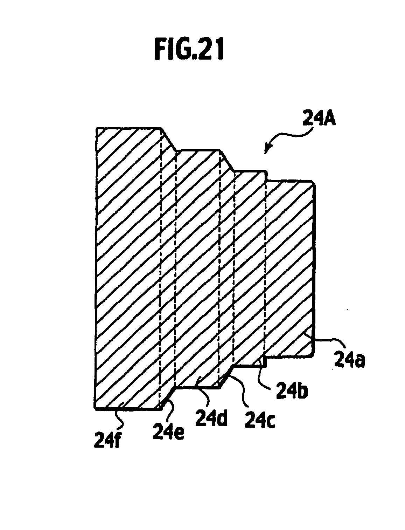

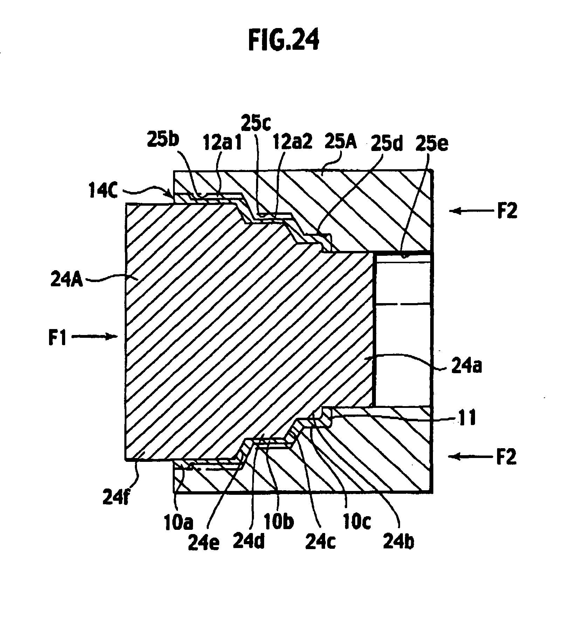

The molding method of the insert component 3C will be described with reference to Figs. 21 to 28. At first, a first pressing process is performed (see Fig. 24).

As shown in Fig. 21, a first inner die 24A having a three-step inner circumferential difference in level is provided. The first inner die 24A has an end edge cylinder 24a. The first inner die 24A includes first press cylinder 24b larger in diameter than the end edge cylinder 24a. The first inner die 24A includes second press cylinder 24d larger in diameter than the first press cylinders 24b. The first inner die 24A includes third press cylinder 24f larger in diameter than the first press cylinders 24d.

The first and second press cylinders 24b, 24d have an oblique step 24c therebetween. The first and second press cylinders 24d, 24f have an oblique step 24e therebetween.

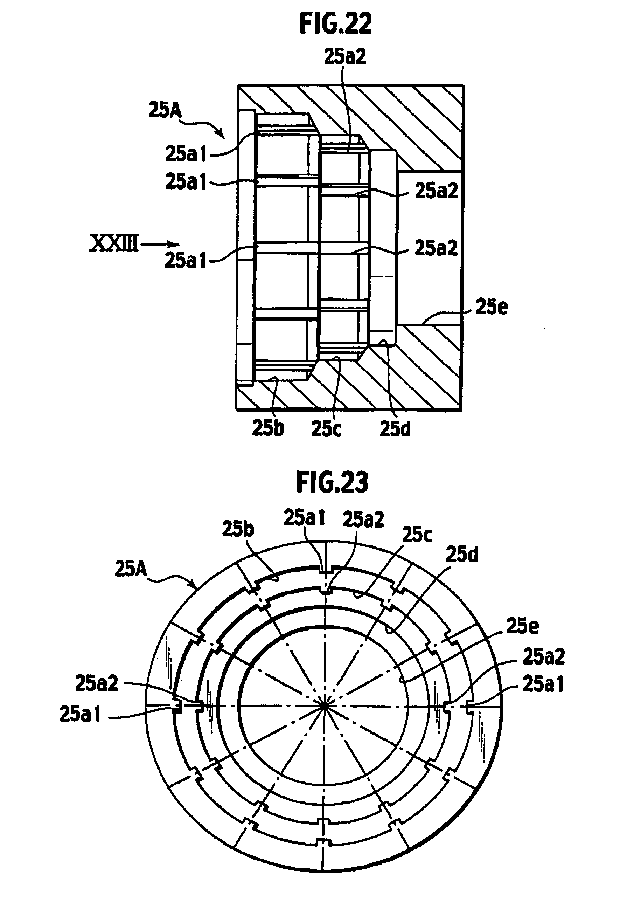

As shown in Figs. 22 and 23, a first outer die 25A having a three-step inner circumferential difference in level, and first and second protrusions 25a1, 25a2 in the circumferential direction with equal intervals are provided.

The first die 25A has a first press-receiving circumference wall 25b. The first die 25A has a second press-receiving circumference wall 25c smaller in diameter than the first press-receiving circumference wall 25b. The first die 25A has a third press-receiving circumference wall 25d smaller in diameter than the second press-receiving circumference wall 25c. The first die 25A has inner wall 25e extending radially inward from the third press-receiving circumference wall 25d.

The first press-receiving circumference wall 25b has first protrusions 25a1 protruding radially inward therefrom. The first protrusions 25a1 are elongated in the axial direction of the first outer die 25A. The second press-receiving circumference wall 25c has second protrusions 25a2 protruding radially inward therefrom. The second protrusions 25a2 are elongated in the axial direction of the first outer die 25A.

The first inner and outer dies 24A, 25A are used to press a disk-shaped metal plate, to mold an insert intermediate product 14C.

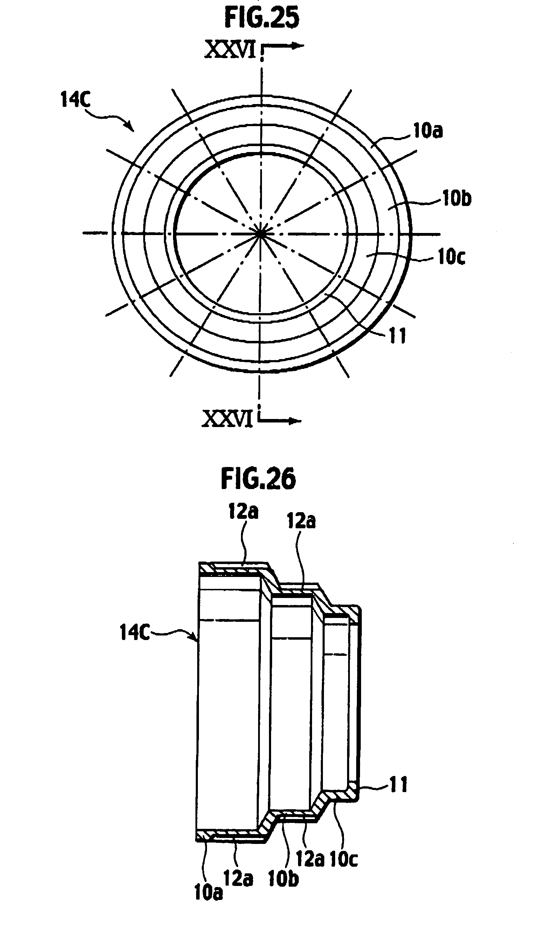

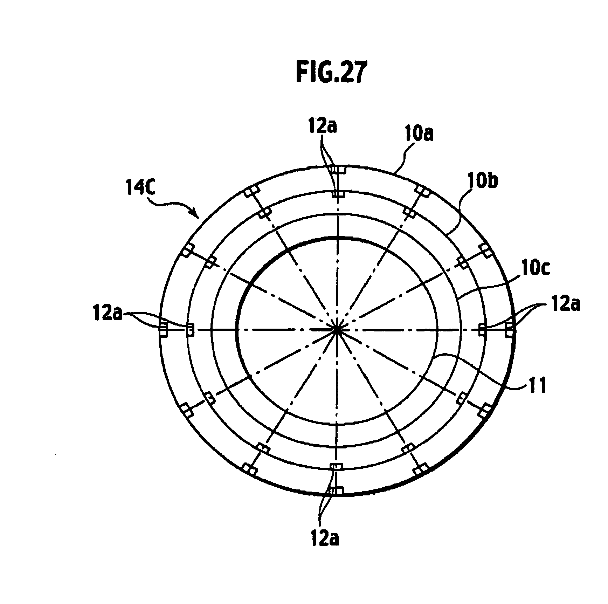

As shown in Figs. 25 and 27, the insert intermediate product 14C has a three-step cylindrical shape having different inner diameters. The insert intermediate product 14C includes the larger diameter portion 10a, the intermediate diameter portion 10b, and the smaller diameter portion 10c. The insert intermediate product 14C has longitudinal grooves 12a open in the die-cutting direction on the outer circumference of the larger diameter portion 10a and the intermediate diameter portion 10b (having a larger diameter than that of the smaller diameter portion 10c), respectively.

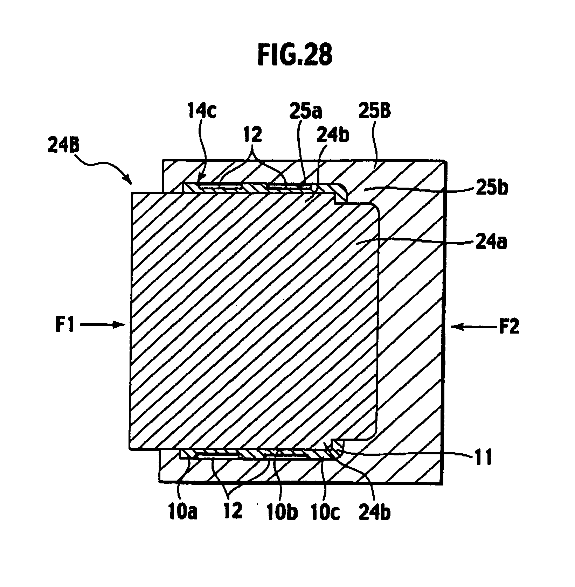

The second inner die 24B and the second outer die 25B are used to perform the second pressing process as shown in Fig. 28. The second inner die 24B has an end edge cylinder 24a having a diameter corresponding to the locking edge 11 of the insert intermediate product 14C, and a press cylinder 24b having substantially the same outer diameter as the inner diameter of the larger diameter portion 10a of the insert intermediate product 14C. The second outer die 25B has a press-receiving circumference 26a having substantially the same diameter as that of the outer circumference of the larger diameter portion 10a of the insert intermediate product 14C. As shown in Fig. 28, the second inner and outer dies 24B and 25B are moved in the opposite directions F1 F2, to press the inner face of the intermediate diameter portion 10b and the smaller diameter portion 10c of the insert intermediate product 14C radially outward. The opened portions of the longitudinal grooves 12a in the die-cutting direction are raised (diameter enlargement) by this press, on the outer circumference of the intermediate diameter portion 10b (having a smaller diameter than that of the larger diameter portion 10a) and the smaller diameter portion 10c. The two-row longitudinal recesses 12 for preventing insert components from rotating and coming off are molded in the circumferential direction with equal intervals by using the longitudinal grooves 12a.

In the insert molding method, at the first pressing process, the longitudinal grooves 12a in two rows are molded on the outer circumferences of the larger diameter portion 10a and the intermediate diameter portion 10b, respectively. At the second pressing process, the intermediate diameter portion 10b and the smaller diameter portion 10b are respectively raised, to mold the longitudinal recesses 12 in two rows for preventing the insert component from rotating and coming off by using the longitudinal grooves 12a. Accordingly, this molding method does not require a mechanical process other than the pressing process with the die, thereby improving the productivity and the cost reduction.

The longitudinal grooves 12a are molded with intervals in the circumferential direction on the outer circumference of the larger diameter portion 10a and the intermediate diameter portion 10b (having a larger diameter than that of the smaller diameter portion 10c), so that independent longitudinal recesses 12, which do not communicate with each other, are molded by the longitudinal grooves 12a. The longitudinal recesses 12 are arranged in the circumferential direction with intervals, and provide prevention of the insert component from rotating and coming off, thereby improving the force for prevnting the insert component from rotation and coming off substantially evenly in the circumferential direction.

The groove is the longitudinal groove 12a extending in the axial direction, or the die-cutting direction. As the longitudinal grooves 12a are molded in the circumferential direction with equal intervals, the shape of the recess is made simple, and force for preventing the insert component from rotating and coming off is improved substantially evenly in the circumferential direction.

According to the fourth embodiment, the longitudinal recesses 12 are formed in two rows on the outer circumference of the cylindrical part 10. On the other hand, transverse recesses may be formed in two rows, or the longitudinal recesses 12 and the transverse recesses may be formed respectively in one row on the outer circumference of the cylindrical part 10.

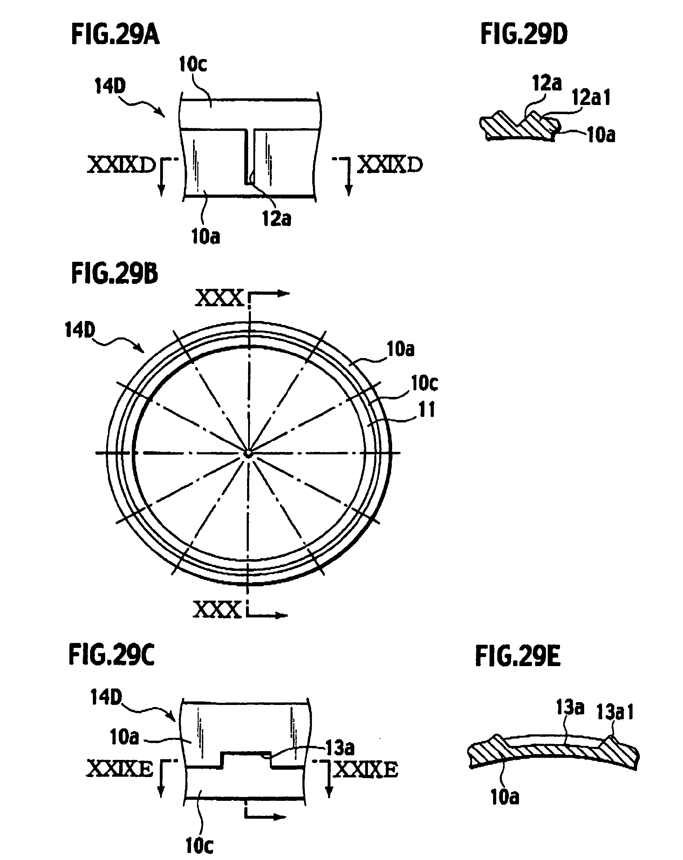

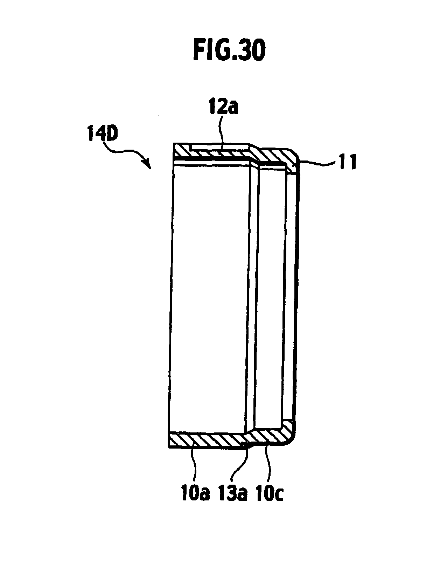

A fifth embodiment will be described, with reference to Figs. 29A to 29E, and Fig. 30.

The insert component (not shown) according to the fifth embodiment is compared with that of the second embodiment. A first characteristic point is that the longitudinal and the transverse grooves 12a and 13a of the insert intermediate product 14D obtained by the first pressing process have a V-shape in cross section. A second characteristic point is that the fringes 12a1 and 13a1 of the longitudinal and the transverse grooves 12a and 13a are both elevated. The elevated portions 12a1 and 13a1 at the fringes of the longitudinal and the transverse grooves 12a and 13a are compressed and planarized at the second pressing process. The insert component itself prepared through the second pressing process has substantially the same structure as that in the second embodiment. In the drawings, like parts are designated with like reference numerals as in the second embodiment, and the description thereof is omitted.

The fifth embodiment can obtain the same action and effect as those of the second embodiment.

According to the respective embodiments, while the insert intermediate product 14A to 14D have a two-step or a three-step cylindrical shape having different inner diameters, the insert intermediate product 14A to 14D may have a cylindrical shape of four steps or more. The recesses on the outer circumference of the larger diameter portion 10a and the intermediate diameter portion 10b are formed in one row or in two rows, but the recesses may be formed in three rows or more.

According to the respective embodiments, while the insert components 3A to 3C are insert-molded in the resin pulley 1, the invention may be applicable to all insert components, which require a stopper mechanism against rotation and coming-off of the insert components with respect to the resin molded article.

Although the invention has been described above by reference to certain embodiments of the invention, the invention is not limited to the embodiments described above. Modifications and variations of the embodiments described above will occur to those skilled in the art, in light of the above teachings. The scope of the invention is defined with reference to the following claims.

## Claims

1. A method of producing a pulley (104, 1) rotatably supported on a support body using a bearing (103, 4) by resin-molding, **characterized by**
fitting the bearing (103, 4) to an inner surface of an insert fitting (109) with a stopper structure (145) on an outer surface thereof;
setting the insert fitting (109) with the bearing in a die; and
performing resin-molding on the outer surface of the insert fitting (109), wherein the stopper structure (145) comes into contact with the resin.

2. A method according to claim 1, **characterized in that** fitting of the bearing (103, 4) to the insert fitting (109) comprises the step of pressing an outer race (103a) of the bearing (103, 4) into the insert fitting (109).

## Patentansprüche

1. Verfahren zum Herstellen einer Riemenscheibe (104, 1), drehbar auf einem Lagerkörper unter Verwendung eines Lagers (103, 4) gelagert, durch Kunstharzgießen, **gekennzeichnet durch**
Einsetzen des Lagers (103, 4) auf eine Innenoberfläche eines Einsatzstückes (109) mit einer Anschlagstruktur (145) an einer Außenoberfläche desselben;
Einsetzen des Einsatzstückes (109) mit dem Lager in eine Form; und
Ausführen des Kunstharzgießens an der Außenoberfläche des Einsatzstückes (109), wobei die Anschlagstruktur (145) mit dem Kunstharz in Kontakt kommt.

2. Verfahren nach Anspruch 1, **dadurch gekennzeichnet, dass** das Einsetzen des Lagers (103, 4) in das Einsatzstück (109) den Schritt des Pressens einer äußeren Laufbahn (103a) des Lagers (103, 4) in das Einsatzstück (109) aufweist.

## Revendications

1. Procédé pour produire une poulie (104, 1) supportée de manière rotative sur un corps de support utilisant un palier (103, 4) réalisé par moulage de résine, **caractérisé par** les étapes consistant à :
monter le palier (103, 4) sur une surface interne d'un raccord d'insert (109) avec une structure de butée (145) sur sa surface externe ;
placer le raccord d'insert (109) avec le palier dans un moule ; et
réaliser le moulage de résine sur la surface externe du raccord d'insert (109), dans lequel la structure de butée (145) vient en contact avec la résine.

2. Procédé selon la revendication 1, **caractérisé en ce que** le raccord du palier (103, 4) sur le raccord d'insert (109) comprend l'étape consistant à comprimer un chemin de roulement externe (103a) du palier (103, 4) dans le raccord d'insert (109).
